# EUROPÄISCHE PATENTSCHRIFT

(11) **EP 1 692 465 B1**
(45) Veröffentlichungstag und Bekanntmachung des Hinweises auf die Patenterteilung: **28.09.2011**
(21) Anmeldenummer: 04804658.5
(22) Anmeldetag: 02.12.2004
(51) Int. Cl.: G01F 1/58

(54) **MAGNETISCH-INDUKTIVER DURCHFLUSSAUFNEHMER UND VERFAHREN ZU DESSEN HERSTELLUNG**
MAGNETIC INDUCTIVE FLOWMETER AND METHOD FOR THE PRODUCTION THEREOF
CAPTEUR DE DEBIT MAGNETO-INDUCTIF ET PROCEDE DE FABRICATION

(30) Priorität: 11.12.2003 DE 10358268; 09.02.2004 DE 102004006382
(43) Veröffentlichungstag der Anmeldung: 23.08.2006
(73) Patentinhaber: Endress + Hauser Flowtec AG, 4153 Reinach BL 1 (CH)
(72) Erfinder: KAPPERTZ, Fred, CH-4146 Hochwald (CH); WILD, Daniel, CH-4127 Birsfelden (CH); VOIGT, Frank, 79576 Well am Rhein (DE)
(74) Vertreter: Andres, Angelika Maria
(86) Internationale Anmeldenummer: PCT/EP2004/053236
(87) Internationale Veröffentlichungsnummer: WO 2005/057140

(56) Entgegenhaltungen:
- EP-A- 1 039 269
- DE-A- 10 064 845
- GB-A- 2 047 409
- US-A- 4 388 834
- US-A1- 2003 213 119

## Beschreibung

Die Erfindung betrifft ein Verfahren zum Herstellen eines magnetisch-induktiven Durchflußaufnehmers und einen mittels des Verfahrens entsprechend herstellbaren Durchflußaufnehmer.

Mittels magnetisch-induktiven Durchflußaufnehmer läßt sich bekanntlich der Volumendurchfluß eines elektrisch leitfähigen Fluids messen, das ein Meßrohr dieses Durchflußaufnehmers in einer Strömungsrichtung durchströmt. Hierzu wird am Durchflußaufnehmer mittels einer an eine Erreger-Elektronik angekoppelten Magnetkreisanordnung ein Magnetfeld von möglichst hoher Dichte erzeugt, das das Fluid innerhalb eines Meßvolumens zumindest abschnittsweise senkrecht zur Strömungsrichtung durchsetzt und das sich im wesentlichen außerhalb des Fluids schließt. Das Meßrohr besteht daher üblicherweise aus nicht-ferromagnetischem Material, damit das Magnetfeld beim Messen nicht ungünstig beeinflußt wird.

Infolge der Bewegung der freien Ladungsträger des Fluids im Magnetfeld wird nach dem magneto-hydrodynamischen Prinzip im Meßvolumen ein elektrisches Feld erzeugt, das senkrecht zum Magnetfeld und senkrecht zur Strömungsrichtung des Fluids verläuft. Mittels wenigstens zweier in Richtung des elektrischen Feldes voneinander beabstandet angeordneter Meßelektroden und mittels einer an diese angeschlossenen Auswerte-Elektronik ist somit eine im Fluid induzierte elektrische Spannung meßbar. Diese Spannung ist ein Maß für den Volumendurchfluß. Der Durchflußaufnehmer ist so aufgebaut, daß sich das induzierte elektrische Feld außerhalb des Fluids praktisch ausschließlich über die an die Meßelektroden angeschlossene Auswerte-Elektronik schließt.

Zum Abgreifen der induzierten Spannung können beispielsweise das Fluid berührende, galvanische oder das Fluid nicht berührende, kapazitive Messelektroden dienen.

Zum Führen und Einkoppeln des Magnetfeldes in das Meßvolumen umfaßt die Magnetkreisanordnung üblicherweise zwei Spulenkerne, die entlang eines Umfanges des Meßrohrs insb. diametral, voneinander beabstandet und mit jeweils einer freien endseitigen Stirnfläche, insb. spiegelbildlich, zueinander angeordnet sind. In die Spulenkerne wird mittels einer an die Erreger-Elektronik angeschlossener Spulenanordnung das Magnetfeld so eingekoppelt, daß es das zwischen beiden Stirnflächen hindurchströmende Fluid wenigstens abschnittsweise senkrecht zur Strömungsrichtung durchsetzt.

Aufgrund der geforderten hohen mechanischen Stabilität für solche Meßrohre, bestehen diese bevorzugt aus einem äußeren, insb. metallischen, Trägerrohr von vorgebbarer Festigkeit und Weite, das innen mit einem elektrisch nichtleitenden Isoliermaterial von vorgebbarer Dicke, dem sogenannten Liner, beschichtet ist. So ist in der US-A-2003/213 119, der US-B 65 95 069, der US-A 5,280,727, der US-A 4,253,340, der US-A 32 13 685 oder der JP-Y 53-51 181 ein magnetisch-induktiver Durchflußaufnehmer beschrieben, der umfaßt:

- ein in eine Rohrleitung druckdicht einfügbares, ein einlaßseitiges erstes Ende und ein auslaßseitiges zweites Ende aufweisendes Messrohr mit

-- einem nicht-ferromagnetischen Trägerrohr als eine äußere Umhüllung des Meßrohrs, und

-- einem in einem Lumen des Trägerrohrs untergebrachten, aus einem Isoliermaterial bestehenden rohrförmigen Liner zum Führen eines strömenden und vom Trägerrohr isolierten Fluids,

- eine am Meßrohr angeordnete Magnetkreisanordnung zum Erzeugen und Führen eines magnetischen Feldes, das im strömenden Fluid ein elektrisches Feld induziert sowie

- eine erste Meßelektrode und eine zweite Meßelektrode für das Abgreifen einer Spannung vom elektrischen Feld.

Der Liner dient der chemischen Isolierung des Trägerrohrs vom Fluid. Bei Trägerrohren von hoher elektrischer Leitfähigkeit, insb. bei metallischen Trägerrohren, dient der Liner außerdem als elektrische Isolierung zwischen dem Trägerrohr und dem Fluid, die ein Kurzschließen des elektrischen Feldes über das Trägerrohr verhindert. Durch eine entsprechende Auslegung des Trägerrohrs ist somit eine Anpassung der Festigkeit des Meßrohrs an die im jeweiligen Einsatzfall vorliegenden mechanischen Beanspruchungen realisierbar, während mittels des Liners eine Anpassung des Meßrohr an die für den jeweiligen Einsatzfall geltenden chemischen, insb. hygienischen, Anforderungen realisierbar ist. Zur Fertigung des Liners werden oftmals Injection-Molding- oder Transfer-Molding-Verfahren angewendet. Es ist jedoch auch üblich, einen vollständig vorgefertigten Liner in das Trägerrohr einzusetzen. So ist in der JP-A 59-137 822 ein Verfahren gezeigt, bei dem der Liner durch Aufweichen Kunststoff-Folie gebildet wird.

In den zumeist aus einem thermo- oder duroplastischen Kunststoff bestehenden Liner wird zu dessen Stabilisierung, wie beispielsweise auch in der EP-A 36 513, der EP-A 581 017, der JP-Y 53 - 51 181, der JP-A 59 - 137 822, der US-B 65 95 069, der US-A 56 64 315, der US-A 5,280,727 oder der US-A 4,329,879 gezeigt, üblicherweise offenporigen, insb. metallischen, Stützkörper eingebettet. Dieser dient dazu, den Liner, insb. gegenüber Druckänderungen und thermisch bedingten Volumenänderungen, mechanisch zu stabilisieren. Beispielsweise ist in der US-A 56 64 315 ist ein Verfahren zum Herstellen eines Meßrohrs eines magnetisch-induktiven Durchflußaufnehmers, das innen einen Liner aufweist, beschrieben, bei dem vor dem Einbringen des Liners in das Trägerrohr ein den Liner mechanisch stabilisierendes Streckmetall-Gitter als vorgefertigter Stützkörper angebracht wird. Weiters ist in der JP-Y 53-51 181 ein rohrförmiger Stützkörper gezeigt, in dessen Mantelflächen Bohrungen eingebracht sind, während in der EP-A 581 017 oder der US-B 65 95 069 gesinterte Stützkörper gezeigt sind. Die Stützkörper sind im Meßrohr mit diesem fluchtend eingebracht und vom Isoliermaterial zumindest auf der das Fluid berührenden Innenseite vollständig umschlossen.

Ferner ist in der US-B 65 95 069 eine Verfahren zur Herstellung eines Liners mit eingebettem Stützkörper gezeigt, bei dem Stützkörper und Liner direkt im Lumen des Trägerrohr hergestellt werden, wobei der Stützkörper zunächst durch Sintern im Träger und der Liner durch Erstarrenlassen von in das Trägerrohr anschließend eingefülltem flüssigem Isoliermaterial gebildet werden.

Durch das Sintern des Stützkörpers direkt im Trägerrohr kann dieser in nahezu beliebiger Weise in seiner Form und Größe an die durch die Anwendung oder auch durch die Hertsellung gestellten Anforderungen angepasst werden. Beispieslweise ist in der US-B 65 95 069 auch gezeigt worden, dass der Stützkörper sich endseitig jeweils aufweitend so geformt ist, dass er sich in entsprechend korrespondierende endseitige trichterförmige Aufweitungen im Trägerrohr einpasst und so axial fixiert wird. Darüberhinaus ist in der US-B 65 95 069 ein Stützkörper gezeigt, der mittig im Trägerrohr eingebrachte seitliche Mantel-Öffnungen ganz oder teilweise ausfüllt und so eine zusätzliche Arretierung des Stützkörpers im Träggerrohr erfolgt.

Es hat sich zwar einerseits erwiesen, daß Liner der beschriebenen Art im Betrieb eine sehr hohe mechanische Langzeitstabilität, auch in Temperaturbereichen von -40°C bis zu 200 °C aufweisen. Andererseits aber ist diese hohe Langzeitstabilität sehr eng an eine extrem hohe Qualität insb. auch des Stützkörpers gebunden.

Untersuchungen haben jedoch gezeigt, dass infolge von, insb. beim Sintern des Stützkörpers und beim Gießen des Liners, zeitweise auftretenden hohen Temperaturen von bis zu 1000 K (Kelvin) und wegen den voneinander üblicherweise verschiedenen Abkühlverhalten von Trägerror und Stützkörper, bedingt durch deren voneinander verschiedenen thermischen Materialeigenschaften und Formen, hohe mechanische Spannungen im Stützkörper auftreten können, die ggf. auch zu Rissbildungen und somit zur Minderung der Qualität des Stützkörpers oder entsprechend sogar zur Zerstörung des Liners führen können. Zudem ist festgestellt worden, dass die nahzu unvermeidliche Schwindung des Sintermaterials nach dem Sinterprozeß zu einem erheblichen Spiel zwischen Stützkörper und Trägerrohr führen kann. Ferner wurde festgestelllt, dass ein solches Spiel beispielsweise bei dem in der US-B 65 95 069 gezeigten Stützkörper zu einer nicht mehr vernachlässigbaren oder tolerierbaren Verschiebung desselben im Trägerrohr führen kann, so dass zusätzliche Maßnahmen der Zentrierung und Arretierung des Stützkörpers im Trägerrohr ergriffen werden müssen.

Eine Aufgabe der Erfindung besteht daher darin, einen magnetisch-induktiven Durchflussaufnehmer sowie ein zur Herstellung eines solchen Durchflussaufnehmers geeignetes Verfahren anzugeben, bei welchem Durchflussaufnehmer einerseits die Neigung des Liners und/oder des ggf. vorhandenen Stützkörpers zu Rissbildungen bei Temperaturänderungen, inbs. bei Abkühlung, erheblich verringert und andererseits ein Verdrehen oder Verschieben des Stützkörpers im Trägerrohr auch bei allfälliger Materialschwindung wirksam verhindert werden kann.

Zur Lösung der Aufgabe besteht die Erfindung in einem magnetisch-induktiven Durchflußaufnehmer für ein in einer Rohrleitung strömendes Fluid, der die Merkmale des Anspruchs 1 umfasst.

Darüber hinaus besteht die Erfindung in einem Verfahren nach Anspruch 8 zum Herstellen des Messrohrs für den vorgenannten erfmdungsgemäßen Durchflussaufnehmer, welches Verfahren die Schritte Fertigung des Stützkörpers im Lumen des Trägerrohrs und Einbringen des Liners in das Lumen des Trägerrohrs umfasst. Zur Fertigung des Stützkörpers wird loses Sinterausgangsmaterial in das Lumen des Trägerrohrs so eingefüllt, dass es die wenigstens eine Nut zumindest teilweise ausfüllt, und wird das eingefüllte Sinterausgangsmaterial innerhalb des Trägerrohrs gesintert. Nachdem das Sinterausgangsmaterial innerhalb des Trägerrohrs gesintert worden ist, wird zum Einbringen des Liners in das Lumen Isoliermaterial in den gefertigten Stützkörper zumindest teilweise eindringen und im Lumen des Trägerrohrs erstarren gelassen.

Nach einer ersten Weiterbildung des Durchflußaufnehmers der Erfindung weist das Messrohr zur Stabilisierung des Liners ferner einen in den Liner eingebetteten offenporigen Stützkörper auf und ist die wenigstens eine, insb. einen Hinterschnitt aufweisende, Nut von einem, insb. gesinterten, Material des, insb. direkt im Trägerrohr gesinterten, Stützkörpers zumindest teilweise so ausgefüllt, daß der Stützkörper formschlüssig mit dem Trägerrohr verbunden ist.

Nach einer ersten Ausgestaltung des Durchflußaufnehmers der Erfindung ist die wenigstens eine, insb. einen Hinterschnitt aufweisende, Nut vom Isoliermaterial des Liners zumindest teilweise so ausgefüllt, daß der Liner formschlüssig mit dem Trägerrohr verbunden ist.

Nach einer zweiten Ausgestaltung des Durchflußaufnehmers der Erfindung weist die wenigstens eine Nut einen Hinterschnitt auf, der so vom Isoliermaterial des Liners ausgefüllt ist, dass zwischen Liner und Trägerrohr ein zumindest radial nach innen wirksamer Formschluß gebildet ist.

Nach einer dritten Ausgestaltung des Durchflußaufnehmers der Erfindung weist die Nut einen im wesentlichen trapez-förmigen Querschnitt auf.

Nach einer vierten Ausgestaltung des Durchflußaufnehmers der Erfindung besteht das Trägerrohr aus nicht-ferromagnetischem Material, insb. aus Edelstahl.

Nach einer fünften Ausgestaltung des Durchflußaufnehmers der Erfindung besteht der Stützkörper aus Sintermetall, Sinterkeramik und/oder Sinterglas.

Nach einer sechsten Ausgestaltung des Durchflußaufnehmers der Erfindung besteht der Liner aus Kunststoff, insb. Thermoplasten oder Duroplasten.

Nach einer Ausgestaltung der ersten Weiterbildung der Erfindung weist die wenigstens eine Nut einen Hinterschnitt auf, der so vom Material des Stützkörpers ausgefüllt ist, dass zwischen Stützkörper und Trägerrohr ein radial nach innen wirksamer Formschluß gebildet ist.

Nach einer weiteren Ausgestaltung der ersten Weiterbildung der Erfindung ist dem Stützkörper ein mit der ersten Nut entsprechend korrespondierender, zumindest anteilig aus dem Material des Stützkörpers bestehender und in die erste Nut hineinragender Steg angeformt.

Nach einer ersten Ausgestaltung des Verfahrens der Erfindung wird zur Fertigung des Stützkörpers das Sinterausgangsmaterial in einen Sinterraum eingefüllt, der im Lumen des Trägerrohrs mittels wenigstens eines darin eingesetzten Sinter-Doms gebildet ist.

Nach einer zweiten Ausgestaltung des Verfahrens der Erfindung wird zum Einbringen des Liners das Isoliermaterial verflüssigt und in einen Gießraum eingefüllt, der im Lumen des Trägerrohrs mittels wenigstens eines darin eingesetzten Gieß-Dorns gebildet ist.

Ein Grundgedanke der Erfindung besteht darin, durch eine zusätzliche, insb. radial nach innen und axial wirkende, formschlüssige Verbindung des Liners und/oder des Stützkörpers mit dem Trägerrohr einerseits im Stützkörper und/oder im Liner maximal auftretende Biegemomente bzw. Biegespannungen zu minimieren und so die Neigung zu Rissbildung in Stützkörper und/oder Liner sehr gering zu halten. Andererseits kann durch eine formschlüssige Verbindung des Stützkörpers mit dem Trägerrohr auch ein Verdrehen oder Verkanten des Stützkörpers im Trägerrohr, insb. vor oder während der Fertigung des Liners, wirksam vermieden werden.

Die Erfindung wird nun anhand der Figuren der Zeichnung näher erläutert, in der Ausführungsbeispiele dargestellt sind. Gleiche Teile sind mit gleichen Bezugszeichen versehen. Falls es die Übersichtlichkeit jedoch erfordert, sind Bezugszeichen in nachfolgenden Figuren weggelassen.

Fig. 1 zeigt perspektivisch im Längsschnitt einen magnetisch-induktiven Durchflußaufnehmer,

Fig. 2 zeigt im Querschnitt einen wesentlichen Teil eines magnetisch-induktiven Durchflußaufnehmers,

Fig. 3a zeigt im Längsschnitt ein Trägerrohr mit Mantel-Öffnungen für das Einsetzen von Spulenkernen und Meßelektroden,

Fig. 3b zeigt im Längsschnitt das Einfüllen von Sintermaterial in das Trägerrohr von Fig. 3a,

Fig. 3c zeigt im Längsschnitt das Trägerrohr von Fig. 3a mit einem Stützkörper und mit darin eingesinterten Spulenkemen,

Fig. 3d zeigt im Längsschnitt das Einfüllen von weiterem Sintermaterial in das Trägerrohr von Fig. 3c,

Fig. 3e zeigt im Längsschnitt das Einfüllen von Isoliermaterial in das Trägerrohr Fig. 3c und

Fig. 3f zeigt im Längsschnitt einen magnetisch-induktiven Durchflußaufnehmer.

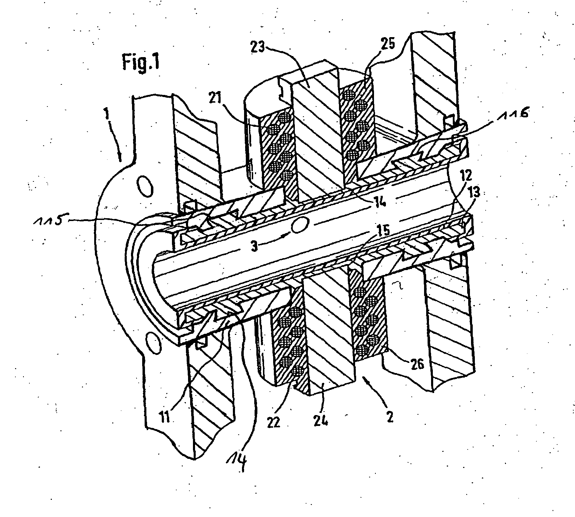

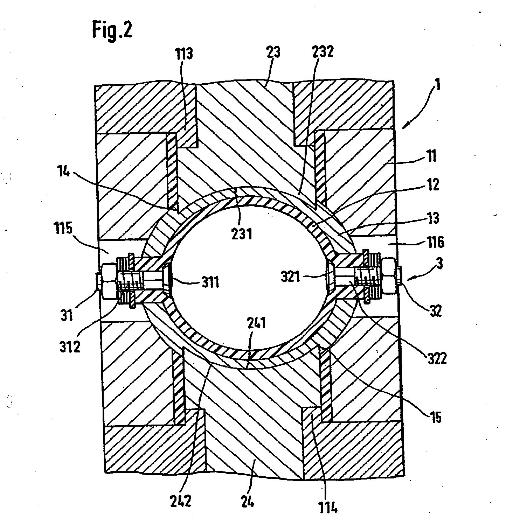

Fig. 1 zeigt perspektivisch im Längsschnitt einen magnetisch-induktiven Durchflußaufnehmer und Fig. 2 zeigt schematisch im Querschnitt einen wesentlichen Teil des Durchflußaufnehmers. Der Durchflußaufnehmer umfaßt ein gerades Meßrohr 1 von vorgebbarer Form und Größe zum Führen eines strömenden Fluids, eine am Meßrohr 1 angeordnete Magnetkreisanordnung 2 zum Führen eines Magnetfeldes durch das Fluid sowie eine ebenfalls am Meßrohr 1 angeordnete Meßelektrodenanordnung 3 zum Messen einer im Fluid induzierten Spannung.

Zum druckdichten Einfügen in eine von einem Fluid durchströmbare Rohrleitung weist das Meßrohr 1 an einem einlaßseitigen erstes Ende einen ersten Flansch und an einem auslaßseitigen zweiten Ende einen zweiten Flansch auf.

Das Meßrohr 1 umfaßt ein Trägerrohr 11 von vorgebbarem Lumen und einen rohrförmigen, aus einem Isoliermaterial bestehenden Liner 12 von vorgebbarer Weite sowie einen in den Liner 12 eingebetteten, offenporiger Stützkörper 13 von vorgebbarer Poren-Größe und Dicke. Der ebenfalls rohrförmig ausgeführte Stützkörper 13 dient der mechanischen Stabilisierung des Liners 12, insb. bei Temperaturen des strömenden Fluids von -40°C bis 200° in einem Druckbereich von 0 bar bis 40 bar.

Das Trägerrohr 11 umschließt den Liner 12 mit eingebettetem Stützkörper 13 koaxial und dient somit als eine äußere formgebende sowie formstabilisierende Umhüllung Meßrohrs 1. Nach den Fig. 1 und 2 ist das Meßrohr 1 so ausgeführt, daß der Stützkörper 13 auf seiner Fluid berührenden Innenseite vollständig vom Liner 12 bedeckt ist und somit allein der Liner 12 vom durch das Meßrohr 1 hindurchströmende Fluid benetzt wird, vgl. hierzu auch die US-A 32 13 685; ggf. kann auch das Trägerrohr 11 selbst innen vom Material des Liners kontaktiert, insb. auch vollständigausgkleidet, sein.

Zum Erzeugen und zum Führen eines das Fluid abschnittsweise durchsetzenden Magnetfelds weist der Durchflußaufnehmer nach den Fig. 1 und 2 eine Magnetkreisanordnung 2 auf. Diese umfaßt eine erste und eine zweite zylindrische Spule 21, 22, von denen jede einen ersten bzw. einen zweiten ferromagnetischen Spulenkern 23, 24 mit jeweils einer freien endseitigen ersten bzw. zweiten Stirnfläche 232, 242 von vorgebbarer Form umgibt. Zur Unterdrückung von Wirbelströmen sind die Spulenkerne bevorzugt als ein einziges Blechformteil oder als Paket von mehreren, elektrisch voneinander isoliert geschichteten Blechformteilen ausgeführt, vgl. die JP-Y 2-28 406 oder die US-A 46 41 537. Außerhalb des Meßrohrs 1 sind die Spulenkerne 23, 24 an deren der jeweiligen Stirnfläche 232 bzw. 242 gegenüberliegenden Enden mit einem nicht dargestellten, ebenfalls ferromagnetischen, Rückschluß von vorgebbarer Länge und Form verbunden. Üblicherweise ist der Rückschluß beiderseits von außen um das Meßrohr 1 gelegt, vgl. hierzu die US-A 46 41 537.

Die Spulen 21, 22 sind jeweils auf einen rohrförmigen, den jeweiligen Spulenkern 23, 24 koaxial umschließenden ersten bzw. zweiten Spulenkörper 25, 26 gewickelt; die Spulen 21, 22 können aber auch selbsttragend oder in den Spulenkörper 25, 26 wenigstens teilweise eingebettet sein. Neben Magnetkreisanordnungen mit zwei Spulen sind auch solche mit drei oder mehr Spulen üblich, vgl. hierzu die JP-A 3 - 218 414. Im Meßbetrieb sind die Spulen 21, 22 mit einer Erreger-Elektronik zum Erzeugen elektrischer Ströme vorgebbarer Stromstärke verbunden und von letzteren durchflossen. Dadurch entstehen zwei Teilmagnetfelder, die die jeweiligen Stirnflächen 232, 242 der zugehörigen Spulenkerne 23, 24 im wesentlichen flächennormal schneiden und sich dabei zu einem resultierenden Magnetfeld gerichtet überlagern. Dieses durchsetzt das innerhalb eines Meßvolumen strömende Fluid abschnittsweise senkrecht zu dessen Strömungsrichtung. Als Erreger-Elektronik können die im Stand der Technik beschriebenen Schaltungsanordnungen verwendet werden.

Zur Aufnahme der Spulenkerne 23, 24 umfaßt das Meßrohr 1 einen ersten Spulenkernsitz 14 für das stirnseitige Einsetzen des Spulenkerns 23 und einen zweiten Spulenkernsitz 15 für das stirnseitige Einsetzen des Spulenkerns 24, vgl. die Fig. 1 und 2. Die Spulenkemsitz 14, 15 weisen eine die jeweilige Stirnflächen 231 bzw. 241 der Spulenkerne 23, 24 formschlüssig berührende erste bzw. zweite Fläche auf, an der der jeweils zugehörige Spulenkern 23, 24 flächig anliegt.

Für das Einsetzen der Spulenkerne 23, 24 in die Spulenkernsitze 14, 15 ist das Trägerrohr 11 mit einer seitlichen ersten Mantel-Öffnung 113 und mit einer seitlichen zweiten Mantel-Öffnung 114 versehen. Beide Mantel-Öffnungen 113, 114 haben die gleiche Form und sind entlang eines Umfangkreises des Trägerrohrs 11 voneinander beabstandet angeordnet, insb. so, daß sie sich diametral gegenüberliegen. Die Spulenkerne 23, 24 sind so durch die jeweilige Mantelöffnung 113 bzw. 114 hindurch in das Meßrohr 1 eingesetzt und so zueinander ausgerichtet, daß sich ihre beiden Stirnflächen 231, 241 entlang des Umfangkreises voneinander beabstandet, insb. diametral beabstandet und spiegelbildlich, gegenüberliegen. Die Mantel-Öffnungen 113, 114 bzw. die Stirnflächen 231, 241 können aber auch entlang einer Sehne des Umfangkreises des Meßrohrs 1 voneinander beabstandet und/oder nicht-spiegelbildlich am Meßrohr 1 angeordnet sein, vgl. JP-A 3 - 218 414. Für das Einsetzen der Spulenkerne 23, 24 sind die Mantel-Öffnungen 113, 114 selbstverständlich so zu dimensionieren, daß die Spulenkerne 23, 24 ohne weiteres hindurchpassen.

Zum Abgreifen einer im Fluid induzierten Spannung weist der Durchflußaufnehmer nach den Fig. 1 und 2 eine am Meßrohr 1 angebrachte Sensoranordnung 3 auf, die eine erste und eine zweite Meßelektrode 31, 32 umfaßt. Die Meßelektroden sind stabförmig mit einem ersten bzw. einem zweiten Meßelektroden-Kopf 311, 321 für das Abgreifen der eingangs erwähnten induzierte Spannung und mit einem ersten bzw. einem zweiten Meßelektroden-Schaft 312, 322, der dem Anschließen der Sensoranordnung an eine Auswerte-Elektronik dient, ausgebildet. Die Meßelektroden 31, 32 können, wie in Fig. 2 dargestellt, galvanische oder aber auch kapazitive Meßelektroden sein. Das Trägerrohr 11 ist daher ferner mit einer seitlichen dritten bzw. vierten Mantel-Öffnung 115, 116 für das Einsetzen der Meßelektrode 31 bzw. 32 versehen. Die Mantel-Öffnungen 115, 116 haben eine Weite, die größer als ein größter Durchmesser des jeweiligen Meßelektroden-Schaftes 312 bzw. 322 ist. Sie haben bevorzugt die gleiche Form und liegen bevorzugt einander diametral gegenüber, wobei ein die Mantel-Öffnungen 115, 116 verbindender Durchmesser des Trägerrohrs 11 zu einem die Mantel-Öffnungen 113, 114 verbindenden Durchmesser des des Trägerrohrs 11 senkrecht verläuft. Selbstverständlich können die Meßelektroden 31, 32, falls erforderlich, insb. bei mehr als zwei Meßelektroden, am Meßrohr 1 so voneinander beabstandet angeordnet werden, daß sie sich nicht diametral gegenüberliegen. Dies ist z.B. dann der Fall, wenn zusätzliche Meßelektroden für Referenzpotentiale oder bei waagerechter Einbaulage des Meßrohrs 1 Meßelektroden zur Überwachung eines Mindestfüllstandes des Fluids im Meßrohr 1 vorgesehen sind.

Erfindungsgemäß weist das Trägerrohr 11 weiters wenigstens eine in eine Wand des Trägerohrs eingeformte, zum Lumen des Trägerrohrs 11 hin offenen erste Nut 115 auf, wobei die Nut 115 vom Isoliermaterial des Liners 13 und/oder vom Material des Stützkörpers 12 zumindest teilweise ausgefüllt ist.

Nach einer Weiterbildung des Durchflußaufnehmers der Erfindung weist das Trägerrohr 11 weiters wenigstens eine zum Lumen des Trägerrohrs hin offenen zweite Nut 116 auf, die von der ersten Nut 115 beabstandet in die Wand des Trägerohrs 11 eingeformt ist. Beide Nuten 115, 116 können in vorteilhafter Weise im wesentlichen einander gleich geformt sein. Falls erforderlich, können selbstverständlich weitere, der Stabilisierung des Liners 12 bzw. des Stützkörpers 13 dienende Nuten im Trägerrohr 11 vorgesehen sein.

Nach einer Ausgestaltung der Erfindung ist die wenigstens eine Nut 115 vom Material des Stützkörpers 12 zumindest teilweise so ausgefüllt, daß der Stützkörper 12 formschlüssig mit dem Trägerrohr 11 verbunden ist, wobei dem Stützkörper 12 ein mit der Nut 115 entsprechend korrespondierender, zumindest anteilig aus dem Material des Stützkörpers bestehender und in die Nut hineinragender Steg 14 angeformt ist.

Nach einer weiteren Ausgestaltung der Erfindung ist die wenigstens eine Nut 115 vom Isoliermaterial des Liners 13 zumindest teilweise so ausgefüllt, daß der Liner 13 formschlüssig mit dem Trägerrohr 11 verbunden ist.

Nach einer anderen Ausgestaltung der Erfindung ist die wenigstens eine Nut sowohl vom Isoliermaterial des Liners 13 als auch vom Material des Stützkörpers 13 zumindest teilweise ausgefüllt, wobei der Steg 14 zumindest anteilig aus dem Isoliermaterial des Liners 13 als auch vom Material des Stützkörpers 12 besteht.

Bevorzugt weist die erste Nut 115, wie in Fig. 1 dargestellt, einen Hinterschnitt auf. Der Hinterschnitt ist so vom Isoliermaterial des Liners 13 ausgefüllt, dass zwischen Liner 13 und Trägerrohr 11 ein radial nach innen, also in Richtung des Lumens, insb. aber ein radial und axial, zu einer Längsachse des Messrohrs 1 wirksamer Formschluß und/oder der Hinterschnitt ist so vom Material des Stützkörpers 12 ausgefüllt, dass zwischen Stützkörper 12 und Trägerrohr 11 ein radial nach innen, insb. aber ein radial und axial, zur Längsachse des Messrohrs 1 wirksamer Formschluß gebildet ist.

Nach einer weiteren Ausgestaltung der Erfindung ist die Nut 115 als eine im wesentlichen koaxial zur Wand des Trägerohrs 11 verlaufende, insb. einen im wesentlichen trapez-förmigen oder schwalbenschwanzförmigen Querschnitt aufweisende, Ringnut ausgebildet, die zumindest abschnittsweise von dem dem Stützkörper 12 und/oder dem Liner 13 angeformten Steg 14 ausgefüllt ist.

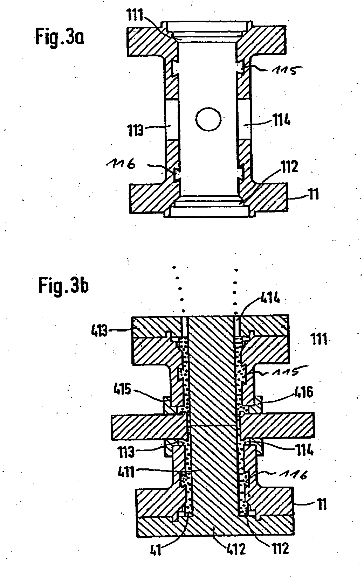

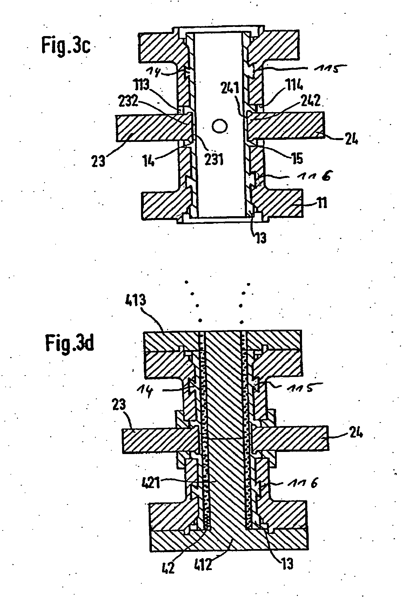

Die Fig. 3a bis 3f zeigen verschiedene Verfahrensschritte des erfindungsgemäßen Verfahrens zur Herstellung des Durchflußaufnehmers.

In Fig. 3a ist das Trägerrohr 11 mit den beiden Nuten 115, 116 in der Wand des Trägerrohrs 11 zu Beginn des Verfahrens gezeigt. Das Trägerrohr 11 wird bevorzugt kostengünstig als Gußteil hergestellt, das nachträglich z.B. durch spanende Verfahren wie Fräsen, Drehen und/oder Bohren fertigbearbeitet wird; es kann selbstverständlich auch, ausschließlich durch spanende Verfahren oder andere dem Fachmann bekannte Herstellverfahren für Rohre gefertigt werden. Als Materialien für das Trägerrohr 11 kommen alle in Durchflußaufnehmem üblicherweise verwendeten Edelstähle, insb. legierte und hochlegierte Edelstähle, zum Einsatz; es können aber auch andere nichtferromagnetische Legierungen, wie z.B. Kupferlegierungen, Titanlegierungen oder Nickellegierungen, aber auch geeignete Kunststoffe, wie z.B. glasfaserverstärkte Kunststoffe, verwendet werden.

Der Stützkörper 13 ist nach Fig. 1 ein rohrförmiger Körper, der beim Verfahren der Erfindung durch In-situ-Sintern von körnigem Sinterausgangsmaterial vorgebbarer Partikel-Größe, also durch Sintern in der endgültigen Einbauform und Einbaulage, im Trägerrohr 11 paßförmig und festsitzend gefertigt wird.

Gemäß Fig. 3b wird zum Sintern des Stützkörpers 13 ein erster Sinter-Dorn 411 in das Lumen des Trägerrohr 11 eingebracht und dort temporär so fixiert, daß ein zum Trägerrohr 11 koaxial verlaufender erster Sinterraum 41 von vorgebbarem ersten Sinter-Volumen gebildet wird. Der Sinter-Dorn 411 besteht aus zwei Teildomen, die so ausgeführt sind, daß sie nach dem Einbringen in das Trägerrohr 11 mit ihren jeweiligen Stirnflächen aneinanderstoßen; der Sinter-Dorn 411 kann selbstverständlich auch in geeigneter Weise einteilig ausgeführt sein.

Er ist bevorzugt rotationssymmetrisch bezüglich einer Längsachse und hat einen kleinsten Durchmesser, der größer als die vorgebbare Weite des Liners 12 ist, und einen größten Durchmesser, der kleiner als ein größter Innen-Durchmesser des Trägerrohrs 11 ist, ausgebildet; der Sinter-Dorn 411 kann selbstverständlich auch, wenn erforderlich, nicht-rotationssymmetrisch, z.B. elliptisch oder prismatisch, ausgeführt sein.

Falls der Stützkörper 13, wie z.B. bei kleinen Nennweiten von 10 mm bis 20 mm üblich, jeweils vom einlaßseitigen und auslaßseitigen Ende nach innen zum Meßrohr konisch oder trichterförmig verjüngt ausgebildet ist, besteht der Sinter-Dorn 411 aus zwei Teildomen, die in entsprechender Weise konisch oder trichterförmig ausgeführt sind und die nach dem Einbringen in das Trägerrohr 11 jeweils mit ihren kleineren Stirnflächen aneinanderstoßen.

Nach dem Einbringen des Sinter-Dorns 411 wird das Trägerrohr 11 so verschlossen, daß nur Einfüll-Öffnungen für das Sinterausgangsmaterial verbleiben. Diese sind dabei bevorzugt durch ein einziges offengelassenes Ende des Trägerrohrs 11 gebildet. Das Fixieren des Sinter-Dorns 411 und das Verschließen des Sinterraums 41 erfolgt üblicherweise mittels eines endseitigen ersten Flansches 412; wird der Sinter-Dorn 411, wie in Fig. 3b dargestellt, auch am zweiten Ende mittels eines endseitigen zweiten Flansches 413 fixiert, so weist bevorzugt einer der beiden Flansche 412, 413 die entsprechenden Einfüll-Öffnungen 414 auf. Es ist selbstverständlich und klar, daß Partikel-Größe, Sinter-Volumen und Einfüll-Öffnungen so zu bemessen sind, daß das Sinterausgangsmaterial in den Sinterraum 41 einfüllbar ist.

Nach dem Verschließen des Sinterraums 41 wird dieser, wie in Fig. 3b schematisch dargestellt, mit dem Sinterausgangsmaterial gefüllt, und zwar so, dass auch die in das Trägerrohr 11 eingeformten Nuten 115, 116 zumindest teilweise befüllt werden. Danach wird das Sinterausgangsmaterial im Sinterraum 41 gesintert, wodurch der Stützkörper 13 im Lumen des Trägerrohr 11 paßförmig und zumindest teilweise auch der Steg 14 gebildet werden, vgl. Fig. 3c. Gegebenenfalls wird das Trägerrohr 11 vor dem Sintern vollständig dicht verschlossen.

Als Sinterausgangsmaterial dienen Metallpartikel, insb. aus Sinterbronze; es können aber auch andere Materialien, wie z.B. Sinterglaspartikel, Sinterkeramikpartikel oder sinterfähige, insb. oberflächen-metallisierte, Kunststoffpartikel, verwendet werden.

Nach den Fig. 1 und 2 ist das Meßrohr 1 innen mit einem Liner 12 ausgekleidet, und zwar so, daß Stützkörper 13 und Trägerrohr 11 im Betrieb des Durchflußaufnehmers vollständig vom hindurchströmenden Fluid isoliert sind.

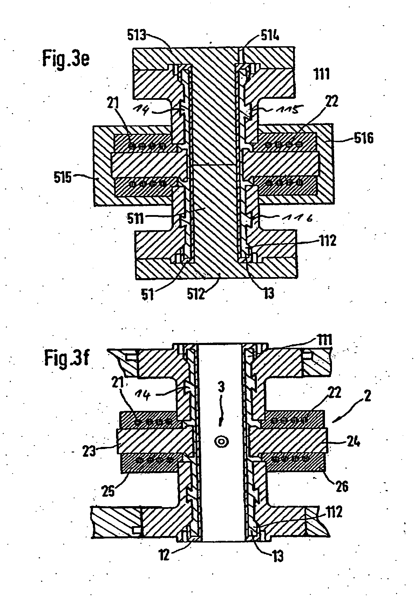

Der Liner 12 wird gemäß Fig. 3e nach der Fertigung des Stützkörpers 13 ebenfalls direkt im Trägerrohr 11 durch Einfüllen und Erstarrenlassen von verflüssigtem Isoliermaterial hergestellt. Dies erfolgt bevorzugt in einem üblichen Transfer-, Kompression- oder Injection-Molding-Verfahren.

Als Isoliermaterial können hierzu alle diejenigen bei magnetisch-induktiven Durchflußaufnehmern üblicherweise für den Liner 12 eingesetzten Kunststoffe dienen, die zum Einbringen in das Trägerrohr 11 mindestens einmal verflüssigt werden können, wie z.B. Thermoplaste, insb. fluorhaltige Thermoplaste oder Polyolefine, oder Duroplaste, insb. Gießharze oder Polyurethane.

Zur Herstellung des Liners 12 wird der beim das Sintern verwendete Sinter-Dorn 411 bzw. 421 durch einen Gieß-Dorn 511 ersetzt, der temporär so im Lumen des Trägerrohr 11 fixiert wird, daß zwischen dem Gieß-Dorn 511 und dem Stützkörper 13 ein mit der Längsachse des Lumens koaxial fluchtender Gießraum 51 von vorgebbarem Gieß-Volumen gebildet wird. Der Gieß-Dorn 511 ist bevorzugt zylindrisch mit einem Durchmesser, der, unter Berücksichtigung eines Gieß-Volumenschwundes nach dem Erstarrenlassen, höchstens gleich der vorgegebenen Weite des Liners 12 ist, ausgebildet.

Nach dem Einbringen des ersten Gieß-Dorns 511 wird das Trägerrohr 11 gießdicht so verschlossen, daß nur Eingieß-Öffnungen für das verflüssigte Isoliermaterial verbleiben. Das Fixieren des Gieß-Dorns 511 und das Verschließen des Trägerrohr 11 erfolgt üblicherweise mittels eines dritten und vierten endseitigen Flansches 512 bzw. 513, von denen z.B. einer eine entsprechende Eingieß-Öffnung 514 aufweist.

Nach dem Verschließen des Trägerrohr 11 wird in den Gießraum 51 verflüssigtes Isoliermaterial eingefüllt. Dieses dringt in die Poren des Stützkörpers 13 ein und füllt diesen aus; ggf. wird so auch der gesinterte Steg 14 mit Isoliermaterial vervollständigt.

Das Einfüllen erfolgt bevorzugt solange bis der Gießraum 51 und der Stützkörper 13 vollständig mit dem Isoliermaterial ausgefüllt sind, mindestens aber solange, bis der Gießraum 51 vollständig und der Stützkörper 13 wenigstens teilweise mit dem Isoliermaterial ausgefüllt sind. Dadurch bedeckt das Isoliermaterial nach dem Erstarren den Stützkörper 13 mindestens an der beim Betrieb des Durchflußaufnehmers dem Fluid zugewandten, inneren Seite vollständig.

Nach dem Einfüllen wird das Isoliermaterial erstarrengelassen und somit der Liner 12 mit eingebettetem Stützkörper 13 im Lumen des Trägerrohrs 11 paßförmig derart gebildet, daß dieser den Stützkörper 13 und das Trägerrohr 11 vom Fluid isoliert.

Das Trägerrohr 11 weist gemäß einer Weiterbildung der Erfindung eine in das einlaßseitige erste Ende eingebrachte stirnseitig erste Aufweitung 111 und eine in das auslaßseitige zweite Ende eingebrachte zweite Aufweitung 112 auf. Die beiden Aufweitungen 111, 112 sind nach Fig. 1 bzw. 3a abschnittsweise einwärts sich konisch verjüngend ausgebildet; sie können aber auch von gerader zylindrischer Form sein.

Beide Aufweitungen 111, 112 sind beim Sintern vom Sinterausgangsmaterial wenigstens teilweise ausgefüllt, und zwar so, daß der gesinterte Stützkörper 13 mit dem Trägerrohr 11 verspannt und somit zusätzlich fixiert ist, vgl. Fig. 3c.

Bevorzugt sind die Aufweitungen 111, 112 vom Stützkörper 13 so ausgefüllt, daß der Liner 12 den Stützkörper 13 im Bereich der Aufweitungen 111, 112 teilweise umgreift und damit endseitig praktisch vollständig überdeckt, vgl. hierzu die Fig. 3e und 3f.

Zur optimalen Anpassung der Poren-Größe an das Isoliermaterial des Liners 12 sowie zur Reduzierung von Volumenschwund des gesinterten Stützkörpers 13 gegenüber dem ersten bzw. zweiten Sinter-Volumen sind nach einer weiteren Ausgestaltung des Verfahrens der Erfindung auch entsprechende sinterfähigen Gemische von verschiedenen Sinterausgangsmaterialien und/oder von unterschiedlichen PartikelGrößen einsetzbar.

Gemäß einer Weiterbildung des Verfahrens der Erfindung werden vor dem Einsetzen des ersten Sinter-Doms 411 in das Trägerrohr 11 Mantel-Öffnungen 113, 114 eingebracht und beim Einfüllen und Sintern des Sinterausgangsmaterials für den Stützkörper 13 mittels eines ersten bzw. mittels eines zweiten Sinterverschlusses 415, 416 sinterdicht verschlossen, vgl. Fig. 3b. Die beiden Sinterverschlüsse 415, 416 sind so ausgeführt, daß der Stützkörper 13 gemäß Fig. 3c die beiden Mantel-Öffnungen 113, 114 wenigstens teilweise ausfüllt. Das Ausfüllen der Mantel-Öffnungen 113, 114 erfolgt z.B. so, daß der Stützkörper 13 seitlich an den Mantel-Öffnungen 113, 114 anliegt und so zusätzlich arretiert ist. Falls erforderlich sind die beiden Mantel-Öffnungen 113, 114 beim Einfüllen und Erstarrenlassen des verflüssigten Isoliermaterials für den Liner 12, wie in Fig. 3e dargestellt, mittels eines ersten bzw. mittels eines zweiten Gießverschlusses 515, 516 gießdicht zu verschließen. Zur weiteren Stabilisierung des Liners 12 können in die Mantel-Öffnungen 113, 114 bei deren Fertigung beispielsweise zusätzliche Stege und Absätze eingeformt, an denen sich der Stützkörper 13 bzw. der Liner 12 abstützt.

Für das spätere Einsetzen der stabförmigen Meßelektroden 31, 32 in das Meßrohr 1 werden nach einer anderen Weiterbildung des Verfahrens der Erfindung auch die Mantel-Öffnungen 115, 116 mittels eines nicht dargestellten dritten bzw. mittels eines ebenfalls nicht dargestellten vierten Sinter-Doms nach dem Einsetzen des ersten Sinter-Doms 411 sinterdicht verschlossen. Das Verschließen Mantel-Öffnungen 115, 116 erfolgt bevorzugt so, daß der dritte und der vierte Dorn bis zum Sinter-Dorn 411 reichen, wodurch sich nach dem Sintern des Stützkörpers 13 die beiden Mantel-Öffnungen 115, 116 in diesem durchgängig fortsetzen, vgl. Fig. 2. Dabei weisen der dritte und vierte Dorn jeweils einen kleinsten Durchmesser auf, der mindestens etwas größer als ein größter Durchmesser des ersten bzw. zweiten Meßelektroden-Schaftes ist.

Bei der Verwendung von galvanischen Meßelektroden gemäß Fig. 2 werden die Mantel-Öffnungen 115, 116 und deren Fortsatz im Stützkörper für das Einfüllen des Isoliermaterials ferner mit einem dritten bzw. einem vierten Gießverschluß gießdicht bevorzugt so verschlossen, daß nach dem Erstarren des Isoliermaterials das Meßrohr 1, ausgehend von der jeweiligen Mantel-Öffnung 115 bzw. 116, eine erste bzw. eine zweite Meßelektroden-Durchführung aufweist. Das gießdichte Verschließen der Mantel-Öffnungen 115, 116 kann beispielsweise so erfolgen, daß die Meßelektroden-Durchführungen an deren Innenseite vollständig und mit einer vorgebbaren Mindestdicke vom Isoliermaterial bedeckt sind und somit bereits während der Fertigung des Liners 12 elektrisch isolierte Meßelektroden-Durchführungen für die nachträglich einzusetzenden Meßelektroden geschaffen werden. Der dritte bzw. des vierte Gießverschlußes ist dabei, unter Berücksichtigung des Gieß-Volumenschwundes, in geeigneter Weise so auszubilden, daß nach dem Erstarrenlassen des Isoliermaterials bereits paßförmige, den Meßelektroden-Schäften 312, 322 entsprechende Meßelektroden-Durchführungen in das Meßrohr 1 eingeformt sind.

Bei der Verwendung von kapazitiven Meßelektroden sind die Gießverschlüsse in besonders vorteilhafter Weise derart ausgebildet, daß in diese die Meßelektroden 31, 32 so eingesetzt werden können, daß letztere nach dem Einfüllen und Erstarrenlassen des Isoliermaterials bereits in ihrer entgültigen Einbaulage im Meßrohr 1 angeordnet und dabei vom Isoliermaterial des Liners 12 gegen über dem Stützkörper 13 und dem Trägerrohr 11 sowie im Betrieb gegenüber dem Fluid vollständig elektrisch isoliert sind. Die Meßelektroden-Schäfte 312, 322 sind innerhalb der Meßelektroden-Durchführung bevorzugt wenigstens abschnittsweise prismatisch, insb. quaderförmig, ausgeführt, wodurch die Meßelektroden 31, 32 ohne ein Gegenwerkzeug im Lumen des Meßrohrs 1 leicht montierbar sind.

Bei mehr als zwei Meßelektroden erfolgt das sinterdichte bzw. gießdichte Verschließen der entsprechenden Meßelektroden-Öffnungen vor dem Sintern des Stützkörpers bzw, vor dem Einfüllen des Isoliermaterials in analoger Weise mit entsprechenden Gieß- bzw. Sinterverschlüssen.

Da es sich sowohl beim In-situ-Sintern als auch beim Einbringen des Isoliermaterials in das Trägerrohr 11 bzw. den Liner 12 um thermische Verfahren zur Erzielung von Rekristallisationsprozessen im Gefüge immer nur genau einer der genannten Komponenten des Meßrohrs 1, nämlich Trägerrohr 11, Stützkörper 13 oder Liner 12, handelt, muß aufgrund der Bearbeitungsreihenfolge die Entfestigungstemperatur des Trägerrohrs 11 größer als die des Stützkörpers 13 und muß letztere wiederum größer als die Schmelztemperatur des Liners 12 sein.

## Patentansprüche

1. Magnetisch-induktiver Durchflußaufnehmer für ein in einer Rohrleitung strömende Fluid, der umfasst:
- ein Meßrohr (1) zum Führen des Fluids,
- eine am Meßrohr (1) angeordnete Magnetkreisanordnung zum Erzeugen und Führen eines magnetischen Feldes, das im strömenden Fluid ein elektrisches Feld induziert und
- Meßelektroden für das Abgreifen einer Spannung vom elektrischen Feld
- wobei das Meßrohr (1) ein Trägerrohr (11) und einen in einem Lumen des Trägerrohrs (11) untergebrachten, aus einem Isoliermaterial bestehenden, insb. rohrförmigen, Liner (12) aufweist,
**dadurch gekennzeichnet, dass**
- dem Trägerrohr (11) wenigstens eine in eine Wand des Trägerohrs (11), zum Lumen des Trägerrohrs (11) hin offenen erste Nut (115) eingeformt ist, wobei die erste Nut (115) als eine im wesentlichen koaxial zur Wand des Trägerohrs (11) verlaufende Ringnut ausgebildet ist und wobei das Trägerrohr (11) weiters wenigstens eine in eine Wand des Trägerohrs (11) eingeformte, zum Lumen des Trägerrohrs (11) hin offenen, zur ersten Nut (115) gleich geformte und von dieser beabstandet angeordnete, zweite Nut (116) aufweist.

2. Magnetisch-induktiver Durchflußaufnehmer nach Anspruch 1,
- bei dem das Messrohr (1) zur Stabilisierung des Liners ferner einen in den Liner (12) eingebetteten offenporigen Stützkörper (13) aufweist und
- bei dem die wenigstens eine, insb. einen Hinterschnitt aufweisende, Nut (115) von einem, insb. gesinterten, Material des, insb. direkt im Trägerrohr (11) gesinterten, Stützkörpers (13) zumindest teilweise so ausgefüllt, daß der Stützkörper (13) formschlüssig mit dem Trägerrohr (11) verbunden ist.

3. Magnetisch-induktiver Durchflußaufnehmer nach Anspruch 2, bei dem die wenigstens eine Nut (115) einen Hinterschnitt aufweist, der so vom Material des Stützkörpers (13) ausgefüllt ist, dass zwischen Stützkörper (13) und Trägerrohr (11) ein radial wirksamer Formschluß gebildet ist.

4. Magnetisch-induktiver Durchflußaufnehmer nach Anspruch 2 oder 3, bei dem dem Stützkörper (13) ein mit der ersten Nut (115) entsprechend korrespondierender, zumindest anteilig aus dem Material des Stützkörpers (13) bestehender und in die erste Nut (115) hineinragender Steg (14) angeformt ist.

5. Magnetisch-induktiver Durchflußaufnehmer nach einem der vorherigen Ansprüche, bei dem die wenigstens eine, insb. einen Hinterschnitt aufweisende, Nut (115) vom Isoliermaterial des Liners (12) zumindest teilweise so ausgefüllt ist, daß der Liner (12) formschlüssig mit dem Trägerrohr (11) verbunden ist.

6. Magnetisch-induktiver Durchflußaufnehmer nach einem der vorherigen Ansprüche, bei dem die wenigstens eine Nut (115) einen Hinterschnitt aufweist, der so vom Isoliermaterial des Liners (12) ausgefüllt ist, dass zwischen Liner (12) und Trägerrohr (11) ein zumindest radial nach innen wirksamer Formschluß gebildet ist.

7. Magnetisch-induktiver Durchüußaufnehmer nach einem der vorherigen Ansprüche, bei dem die erste Nut (115) einen im wesentlichen trapez-förmigen Querschnitt aufweist.

8. Verfahren zum Herstellen des Messrohrs für einen Durchflussaufnehmer gemäß einem der vorherigen Ansprüche, welches Verfahren die Schritte:
- Fertigung des Stützkörpers (13) im Lumen des Trägerrohrs (11) und
- Einbringen des Liners (12) in das Lumen des Trägerrohrs (11) umfasst,
- wobei zur Fertigung des Stützkörpers (13)
- loses Sinterausgangsmaterial in das Lumen des Trägerrohrs (11) so eingefüllt wird, dass es die Nuten (115, 116) zumindest teilweise ausfüllt, und
- das eingefüllte Sinterausgangsmaterial innerhalb des Trägerrohrs (11) gesintert wird, und
- wobei zum Einbringen des Liners (12) in das Lumen Isoliermaterial in den gefertigten Stützkörper (13) zumindest teilweise eindringen und im Lumen des Trägerrohrs (11) erstarren gelassen wird, nachdem das Sinterausgangsmaterial innerhalb des Trägerrohrs (11) gesintert worden ist.

## Claims

1. Electromagnetic flow sensor for a fluid flowing through a pipe, comprising:
- a measuring tube (1) to convey the fluid,
- a magnetic circuit arrangement arranged on the measuring tube (1) to generate and conduct a magnetic field which induces an electric field in the flowing fluid, and
- measuring electrodes for measuring a voltage of the electric field
- wherein the measuring tube (1) has a carrier tube (11) and a liner (12), particularly tubular, said liner being made from an insulating material and accommodated in a lumen of the carrier tube (11),
**characterized in that**
at least a first groove (115) is formed in a wall of the carrier tube (11), said groove being open towards the lumen of the carrier tube (11), wherein the first groove (115) is formed as an annular groove that primarily extends coaxially to the wall of the carrier tube (11), and wherein the carrier tube (11) further has at least a second groove (116) which is formed in a wall of the carrier tube (11), is open towards the lumen of the carrier tube (11), has the same shape as the first groove (115) and is arranged at an distance from the first groove.

2. Electromagnetic flow sensor as claimed in Claim 1,
- where, for the purpose of stabilizing the liner, the measuring tube (1) further has an open-pore support body (13) embedded into the liner (12) and
- where at least the one groove (115), particularly with an undercut, is at least partially filled by a material, particularly a sintered material, of the support body (13), particularly the support body directly sintered in the carrier tube (11), in such a way that the support body (13) is connected to the carrier tube (11) in a positive locking manner.

3. Electromagnetic flow sensor as claimed in Claim 2, where at least one groove (115) has an undercut which is filled in by the material of the support body (13) in such a way that a radially acting form fit is created between the support body (13) and the carrier tube (11).

4. Electromagnetic flow sensor as claimed in Claim 2 or 3, where a tongue (14), which corresponds accordingly to the first groove (115), projects into the first groove (115) and is made at least partially from the material of the support body (13), is formed onto the support body (13).

5. Electromagnetic flow sensor as claimed in one of the previous claims, where at least one groove (115), particularly with an undercut, is filled in at least partially by the insulating material of the liner (12) in such a way that the liner (12) is connected to the carrier tube (11) in a positive locking manner.

6. Electromagnetic flow sensor as claimed in one of the previous claims, where the one groove (115), at least, has an undercut, which is filled in by the insulating material of the liner (12) in such a way that a form fit that acts radially at least towards the inside is formed between the liner (12) and the carrier tube (11).

7. Electromagnetic flow sensor as claimed in one of the previous claims, where the first groove (115) has a primarily trapezoidal cross-section.

8. Method to produce a measuring tube for a flow sensor as claimed in one of the previous claims, said method comprising the following steps:
- production of the support body (13) in the lumen of the carrier tube (11) and
- introduction of the liner (12) into the lumen of the carrier tube (11),
- wherein, to produce the support body (13)
-- loose source sintering material is introduced into the lumen of the carrier tube (11) in such a way that it at least partially fills in the grooves (115, 116)
-- the introduced source sintering material is sintered in the carrier tube (11), and
- wherein to introduce the liner (12) into the lumen insulating material is allowed to at least partially penetrate the finished support body (13) and harden in the lumen of the carrier tube (11) once the source sintering material has been sintered in the carrier tube (11).

## Revendications

1. Débitmètre magnéto-inductif destiné à un fluide s'écoulant dans une conduite, lequel débitmètre comprend :
- un tube de mesure (1) destiné au guidage du fluide,
- un circuit magnétique disposé sur le tube de mesure (1), destiné à la génération et au guidage d'un champ magnétique, lequel circuit induit un champ magnétique dans le fluide en circulation et
- des électrodes de mesure pour le prélèvement d'une tension du champ électrique
- le tube de mesure (1) comprenant un tube support (11) et un liner (12) notamment en forme de tube, constitué d'un matériau isolant et logé dans un canal intérieur du tube support (11), et
**caractérisé en ce**
**qu'**est formée, dans le tube support (11), au moins une première rainure ouverte (115) réalisée dans une paroi du tube support (11), en direction du canal intérieur du tube support (11), la première rainure (115) étant formée en tant que rainure annulaire s'étendant pour l'essentiel de façon coaxiale par rapport à la paroi du tube support (11) et le tube support (11) comprenant par ailleurs au moins une deuxième rainure ouverte (116), de forme identique à la première rainure (115) et disposée à distance de celle-ci, formée dans une paroi du tube support (11) en direction du canal intérieur du tube support (11).

2. Débitmètre magnéto-inductif selon la revendication 1,
- pour lequel le tube de mesure (1) comporte par ailleurs, en vue de la stabilisation du liner, un corps support (13) à pores ouverts, incorporé dans le liner (12) et
- pour lequel au minimum la rainure (115), qui présente notamment une contre-dépouille, est remplie au moins partiellement d'un matériau du corps support (13), notamment fritté directement dans le tube support (11), de telle manière que le corps support (13) soit relié sans jeu avec le tube support (11).

3. Débitmètre magnéto-inductif selon la revendication 2, pour lequel au minimum la rainure (115) présente une contre-dépouille, laquelle est remplie par le matériau du corps support (13), de telle manière à former, entre le corps support (13) et le tube support (11) un engagement positif agissant radialement.

4. Débitmètre magnéto-inductif selon la revendication 2 ou 3, pour lequel une nervure (14) se projetant à l'intérieur de la première rainure (115), constituée au moins partiellement du matériau du corps support (13), correspondant de façon appropriée à la première rainure (115), est formée dans le corps support (13).

5. Débitmètre magnéto-inductif selon l'une des revendications précédentes, pour lequel au minimum la rainure (115), qui présente notamment une contre-dépouille, est remplie au moins partiellement par le matériau isolant du liner (12), de telle sorte que le liner (12) soit relié sans jeu avec le tube support (11).

6. Débitmètre magnéto-inductif selon l'une des revendications précédentes, pour lequel au minimum la rainure (115) présente une contre-dépouille, laquelle est remplie de matériau isolant du liner (12), de telle manière à former, entre le liner (12) et le tube support (11), au moins un engagement positif agissant radialement vers l'intérieur.

7. Débitmètre magnéto-inductif selon l'une des revendications précédentes, pour lequel la première rainure (115) présente pour l'essentiel une section trapézoïdale.

8. Procédé destiné à la fabrication du tube de mesure pour un débitmètre selon l'une des revendications précédentes, lequel procédé comprend les étapes suivantes :
- fabrication du corps support (13) dans le canal intérieur du tube support (11) et
- introduction du liner (12) dans le canal intérieur du tube support (11),
- pour lequel, en vue de la fabrication du corps support (13)
-- un matériau de frittage de départ, en vrac, est rempli dans le canal intérieur du tube support (11), de telle manière à remplir au moins partiellement les rainures (115, 116), et
-- le matériau de frittage de départ rempli est fritté à l'intérieur du tube support (11), et
- pour lequel, en vue de l'introduction du liner (12) dans le canal intérieur, du matériau isolant est en partie fait pénétrer dans le corps support (13) fabriqué et fait se solidifier dans le canal intérieur du tube support (11) après que le matériau de frittage de départ ait été fritté à l'intérieur du tube support (11).
